# EUROPEAN PATENT SPECIFICATION

(11) **EP 1 087 671 B1**
(45) Date of publication and mention of the grant of the patent: **16.10.2002**
(21) Application number: 99926404.7
(22) Date of filing: 25.05.1999
(51) Int. Cl.: A23L 1/212

(54) **THICKENING AGENT BASED ON DRIED, HOMOGENISED FRUIT OR VEGETABLE PUREE, THE PREPARATION THEREOF AND ITS USE IN FOODSTUFFS**
VERDICKUNGSMITTEL AUF BASIS VON GETROCKNETEM, HOMOGENISIERTEM OBST- ODER GEMÜSEPÜREE, VERFAHREN ZU SEINER HERSTELLUNG UND SEINE VERWENDUNG IN NAHRUNGSMITTELN
AGENT EPAISSISSANT A BASE DE PUREE DE LEGUMES OU DE FRUITS HOMOGENEISES ET DESHYDRATES, ET SON PROCEDE DE PREPARATION ET D'UTILISATION DANS LES PRODUITS ALIMENTAIRES

(30) Priority: 15.06.1998 EP 98304723
(43) Date of publication of application: 04.04.2001
(73) Proprietor: UNILEVER N.V., 3013 AL Rotterdam (NL); UNILEVER PLC, London EC4P 4BQ (GB)
(72) Inventor: BELMAR, Maria T., Unilever Research Colworth, Bedford, Bedfordshire MK44 1LQ (GB); EYRE, Cecelia, Unilever Research Colworth, Bedford, Bedfordshire MK44 1LQ (GB); GODDARD, Mervyn R., Van den Bergh Foods Ltd., Crawley, Sussex RH10 2RQ (GB); THOMPSON, Eric W., Rushden, Northamptonshire NN10 0SY (GB); TAMAI, Michela, Unilever Research Colworth, Bedford, Bedfordshire MK44 1LQ (GB)
(74) Representative: Wurfbain, Gilles L.
(86) International application number: EP9903594
(87) International publication number: WO99065334

(56) References cited:
- EP-A- 0 510 422
- WO-A-91/03168
- CA-A- 920 867
- FR-A- 1 162 457
- FR-A- 2 263 705
- GB-A- 462 653
- US-A- 4 160 849
- DATABASE WPI Section Ch, Week 8934 Derwent Publications Ltd., London, GB; Class D13, AN 89-246992 XP002083248 & SU 1 440 464 A (FOOD IND PLAN DES BUR), 30 November 1988 (1988-11-30)

## Description

### Field of the invention

The present invention relates to a process for preparing a thickening agent in dry form suitable for application in foodstuffs. Also, the invention relates to the thickening agent itself and the use of such thickening agent for thickening foodstuffs, in particular thickening liquid, pourable, spoonable, or squeezable foodstuffs.

### Background of the invention

A broad range of dry thickeners are conventionally employed to achieve the desired thickness and consistency of various (liquid, pourable or squeezable) foodstuffs. Well-known in this respect are the use of starch and gellable biopolymers or gums. Examples of the latter group are gelatin, agar, carrageenans, pectins, alginates, xanthan, locust bean gum etcetera.

The application of (native) starch, however, may result in a sticky mouthfeel and/or characteristic smell or flavour of starch, which is less desirable. Also, the use of starch as a thickener may result in less heat stability of the thickened foodstuff and/or retrogradation upon cooling.

The use of native starch as a thickener without gums will generally result in a gelled consistency when cooling as a result of a network formed by the amylose when leached out from the starch granules during processing, which is undesirable for preparing pourable foodstuffs such as e.g. sauces.

The disadvantage of reduced heat stability and/or retrogradation may be overcome by the application of (chemically) modified starches, which are in many countries to be labelled as such on the packaging of the foodstuff concerned, and are as such unattractive.

The use of native starch mixed in combination with certain gums may overcome some of the disadvantages of native starch: applying heat may result in amylose leaking out of the starch granules, but phase sepraration occurs due to the presence of the gums.

The application of gums has its disadvantages as well, ranging from a tendency to produce slimy, slightly gellified foodstuffs to non-vegetable origin (e.g. gelatin) to high costs (most gums). Additional disadvantages include reduced heat-stability for many gums similar to that of starch.

Although various solutions have been proposed in the past to overcome these problems, many of these solutions gave rise to other disadvantages.

WO 91/03168 relates to vegetable or plant matter processed into a homogenous, fibrous and gelatnious mass. The aim is to provide a composition which acts as emulsifier, homogeniser, thickener. Processing involves cutting, heating, blending and drying of rhubarb or cranberries.

US 4 160 849 discloses treating potato pulp, to yield a product that can be used for thickening sauces.

### Summary of the invention

Hence, there was a need for an alternative dry thickening agent, a process for its preparation as well as a process for thickening liquid, pourable, spoonable or squeezable foodproducts without the disadvantages as mentioned above.

Preferably said thickening agent should provide good thickening characteristic independent upon temperature during manufacture of the food product or use thereof. In other words, the so obtained thickened food products should be thickened but preferably not gelled, be free of a starchy flavour or smell, be at least reasonably stable under heating and cooling conditions, and preferably provide a thickening effect both in hot (e.g. sauces, soups) or cold (e.g. dressing) applications.

Furthermore, the thickened foodstuff should preferably be free of gums from non-vegetable origin (such as gelatin). Preferably, the foodstuff so prepared should also be free of other gums or thicking biopolymers. Additionally, the thickened foodstuff should be free of any grainy or sandy texture resulting from the thickener.

It has now been found that the desired thickening agent can be prepared by a process which involves subjecting fruit or vegetables to a homogenisation treatment and drying the obtained homogenate to obtain a particulate product.

### Detailed description of the invention

In the present invention the thickening effect is obtained from homogenised vegetables. JP 57/202257 decribes thickening of soups, stews, etcetera, by the incorporation in such products of smashed, steamed and homogenised vegetables which are rich in starch. Rich in starch is reported in this reference to mean vegetable containing about 70% or more starch in the dry vegetable, such as potato, sweet potato, taro, cassava, and pumpkin. The homogenisation is according to this reference to be carried out at pressures between 30-150 bar, with 50-80 bar being preferred.

In the present invention the thickening effect of homogenised and dried vegetables is more or less independent upon the content of starch of the vegetable used, and in order to overcome some of the disadvantages related to the use of starch as a thickenenr (as set out above), the content of starch of the vegetable used is preferably low. For the person of average skill in the art, is is surprising that, when confronted with the disclosure as mentioned above, a thickening effect can achieved without much starch being present.

Without wishing to be bound by any theory, it is believed that in the present invention the tickening effect is obtained by the presence of a mixture of intact vegetable cells, cell debris, cell wall fragments, etcetera.

In the process according to this invention and as set out above it is preferred that the starch content of the vegetables used for preparing the homogenised vegetable puree is less than 70% based on the dry vegetable, preferably less than 50%, more preferably even lower than 35%.

Preferred vegetables for this invention are (apart from the above mentioned requirements) vegetables of white or pale colour, e.g. parsnips, mushrooms, cauliflower, swede, and turnips. For specific foodstuffs vegetables having a green or orange color, like carrots, courgettes, broccoli, may also be used. Needless to say, mixtures may also be used.

In the process according to the present invention the homogenisation treatment can be effected by any homogeniser suitable for application to foodstuffs. As various types of homogenisers operate following different principles, homogenisation pressures from one type of homogeniser to another type of homogeniser cannot be compared directly. It was found in the present case that homogenisation of the vegetables is preferably carried out by a high pressure homogeniser at a pressure of 100-200 bar or any equivalent treatment (in terms of results) by a different type of homogeniser, such as an ultrasonic homogeniser. For some purposes, pressures higher than 150 bar may be preferred.

In the process according to the invention, it is preferred that prior to the homogenisation step the vegetables are cooked. Preferably, the homogenisation operation is also preceeded by a comminuting (including chopping, slicing, etcetera) operation. Depending e.g. on the vegetables chosen, they may be peeled and/or parts of the vegetable (e.g. leaf, stem, bruised spots) may be removed first.

After homogenisation, the obtained homogenates are to be dried, preferably to a dry, particulate material (moisture percentage less than 25%, preferably less than 15%). Drying can be effected using any suitable drying technique as known in the art, e.g. spray drying, drum drying or freeze drying. Depending upon the drying technique chosen, a grinding, milling or comminuting step may be employed after the drying operation.

The so-obtained dry thickener may be used in foodstuffs in almost any desired quantity, depending on the thickening effect desired and the vegetable chosen. Typical amounts range from 0.1-30% dry material on the thickened foodstuff.

Preferably, the amount will be 1-15%. The particulate thickener according to the invention may be added to the foodstuff at almost any stage of processing, under stirring or mixing operation. The material according to the invention can most suitable be added to foodstuffs which need to be liquid, pourable, squeezable or spoonable, such as soups, sauces, simmer sauces, dressings, mayonnaise, etcetera. The homogenised vegetable puree is suitable for application to aqueous foodstuffs, in particular suitable for thickening sauces, simmer sauces, sauce base products (which are to be diluted by an aqueous liquid prior to consumption) and the like. Also, the homogenised vegetable puree can be incorporated into emulsified foodstuffs, like mayonaise, dressings or fat/oil-containing sauces. The thickened foodstuffs according to the invention can be consumed both cold and hot, without substantial change in thickeness.

Depending upon the intended use of the thickend foodstuff it may further contain water, organic acids, oil, fat, herbs, spices, comminuted fruits, comminuted vegetables, or mixtures thereof.

Upon use, it was found that the thickener according to the invention shows upon use very good (physical) stability, without substantial phase separation, thinning, syneresis of the thickened products over periods of more than 6 weeks. It was also found that foodstuffs thickened using a thickener according to the invention can be free of sandy or grainy texture, and provide a smooth mouthfeel.

In the present invention, the use of thickeners based on non-starch like biopolymers like gelatin, agar, alginate, carrageenans, xanthan, pectins and pect(in)ic substances, CMC and the like can be dispensed with, but the thickeners may be used in combination.

The invention further encompasses the dry thickener prepared according to the above, as well as its use in thickening foodstuffs, both for animal and human consumption.

The invention is further exemplified by the following examples, which are to be understood as to be non-limiting.

### Examples

Four examples have been prepared using dried, homogenised vegetables as thickener in a basic sauce preparation. The complete formulations had compositions as set out in Table 1. Basically, examples 1 and 2 as compared with 3 and 4 differed in the type of vegetable used, whereas examples 1 and 3 are different in processing when compared with 2 and 4.

**Table 1:**

| composition examples 1-4 | | |
|---|---|---|
| Ingredients (% wt) | Examples 1 and 2 | Examples 3 and 4 |
| Sunflower oil | 10.0 | 10.0 |
| modified egg yolk | 0.5 | 0.5 |
| dried, homogenised parsnip | 6.7 | |
| dried, homogenised carrot | | 5.0 |
| salt | 0.4 | 0.4 |
| sugar | 0.6 | 0.6 |
| water | 81.8 | 83.5 |
| total | 100 | 100 |

### Processing examples 1 and 3

The vegetables were peeled, sliced and cooked in deionized boiling water for 15 minutes. Therafter, they were pureed in an industrial food processor (Robocoup Juicer) with a 0.5 mm sieve.

The so-obtained purees were mixed with water (in such an amount that the total solids content is 6%) and passed through a high pressure homogeniser (type Niro Soavi Pand lab Bench Model) at 150 bar to obtain the homogenised vegetable.

The so-obtained homogenised vegetables were then spray dried to result in a product fine free flowing powder having a final moisture content of about 10%.

A pre-emulsion was prepared by mixing water, modified egg-yolk, and oil in the amounts as specified in the table above, using a high shear mixer. To this pre-emulsion, the dried, homogenised vegetables are added and mixed. To this mixture the salt and sugar are then added and mixed. This pre-emulsified mix is then passed through a high pressure homogeniser (type Niro Soavi Pand Lab bench model, 150 bar). The result is an emulsified cold sauce, having a smooth, creamy appearance.

The cold sauce was heated to boiling, hot filled in glass jars and pasteurised.

The pasteurised samples were stored for 6 weeks (chilled), opened and reheated, which resulted in a smooth, thick, creamy sauce having good mouthfeel and appearance.

### Processing examples 2 and 4

The vegetables were peeled, sliced and cooked in deionized boiling water for 15 minutes. Therafter, they were pureed in an industrial food processor (Robocoup Juicer) with a 0.5 mm sieve.

The so-obtained purees were mixed with water and passed through a high pressure homogeniser (type Niro Soavi Pand lab Bench Model) at 150 bar to obtain the homogenised vegetable. Both with carrots and parsnip a total solids content of 6% was obtained.

The so-obtained homogenised vegetables were then spray dried to result in a product fine free flowing powder having a final moisture content of 10%.

A pre-emulsion was prepared by mixing water, modified egg-yolk, and oil in the amounts as specified in the table above, using a high shear mixer. To this pre-emulsion was added salt and sugar in amounts give above. The so-prepared pre-emulsion was the passed through a high pressure homogeniser (same type and pressure as above).

To the cold emulsion the dried, homogenised vegetables were added, so that a cold sauce was obtained having a smooth appearance.

The cold, emulsified sauce was heated to boiling, hot filled in glass jars and pasteurised.

The pasteurised samples were stored for 6 weeks (chilled), opened and reheated, which resulted in a smooth, thick, sauce having good mouthfeel and appearance.

## Claims

1. Process for the preparation of a thickening agent, which process involves subjecting fruit or vegetables to a homogenisation treatment and drying the obtained homogenate to obtain a particulate product, wherein the homogenisation treatment is carried out by a high pressure homogeniser at a pressure of 100-200 bar or an ultrasonic homogeniser.

2. Process according to claim 1, wherein the drying is effected by spray drying, drum drying or freeze drying.

3. Process according to any of claims 1-2, wherein prior to the homogenisation treatment the fruit or vegetable is cooked.

4. Process according to any of claims 1-4, wherein the fruit or vegetable has a starch content of less than 70 wt% based on the dry fruit or vegetable.

5. Process according to any of claims 1-5, wherein the fruit or vegetable comprises parsnip, turnip, swede, mushrooms, cauliflower, broccoli, carrots, tomatoes, apple or mixtures thereof.

6. A dried, particulate thickening agent comprising high-pressure homogenised vegetables and/or fruits, obtainable by a process according to claim 1-5.

7. A particulate thickening agent according to claim 6, containing additional thickeners.

8. Process for thickening a liquid, pourable, spoonable or squeezable foodproduct by incorporating in said foodstuff in an amount of between 0.1 and 30% by weight a particulate thickening agent according to claim 6 or 7.

9. Process according to claim 8, wherein the particulate thickening agent is incorporated in the food product in an amount of between 1 and 15% by weight based on the final food product.

## Patentansprüche

1. Verfahren zur Herstellung eines Verdickungsmittels, worin das Verfahren umfasst: Unterziehen von Obst oder Gemüsen einer Homogenisierungsbehandlung und Trocknen des erhaltenen Homogenisats, um ein teilchenförmiges Produkt zu erhalten, worin die Homogenisierungsbehandlung mit einem Hochdruck-Homogenisator bei einem Druck von 100 bis 200 bar oder einem Ultraschall-Homogenisator durchgeführt wird.

2. Verfahren nach Anspruch 1, worin das Trocknen durch Sprühtrocknen, Trommeltrocknen oder Gefriertrocknen durchgeführt wird.

3. Verfahren nach irgendeinem der Ansprüche 1 bis 2, worin das Obst oder Gemüse vor der Homogenisierungsbehandlung gekocht wird.

4. Verfahren nach irgendeinem der Ansprüche 1 bis 3, worin das Obst oder Gemüse einen Stärkegehalt von weniger als 70 Gew.-%, bezogen auf das trockene Obst oder Gemüse, beträgt.

5. Verfahren nach irgendeinem der Ansprüche 1 bis 4, worin das Obst oder Gemüse Pastinak, weiße Rüben, schwedische Rüben, Pilze, Blumenkohl, Broccholi, Karotten, Tomaten, Äpfel oder Mischungen hiervon umfasst.

6. Getrocknetes, teilchenförmiges Verdickungsmittel, umfassend Hochdruck-homogenisierte Gemüse und/oder Obst, erhältlich durch ein Verfahren nach den Ansprüchen 1 bis 5.

7. Partikelförmiges Verdickungsmittel nach Anspruch 6, das zusätzlich Verdicker enthält.

8. Verfahren zum Verdicken eines flüssigen, gießfähigen, löffelbaren oder zusammendrückbaren Nahrungsmittels durch Einverleiben eines teilchenförmigen Verdickungsmittels nach Anspruch 6 oder 7 in das Nahrungsmittel in einer Menge zwischen 0,1 und 30 Gew.-%.

9. Verfahren nach Anspruch 8, worin das teilchenförmige Verdickungsmittel in das Nahrungsmittel in eine Menge zwischen 1 und 15 Gew.-%, bezogen auf das Endnahrungsmittel, einverleibt wird.

## Revendications

1. Procédé de préparation d'un agent épaississant, ledit procédé impliquant le fait de soumettre des fruits ou des légumes à un traitement d'homogénéisation et de déshydrater le produit homogénéisé ainsi obtenu afin de fournir un produit particulaire, dans lequel le traitement d'homogénéisation est effectué à une pression de 100 - 200 bars ou dans un homogénéisateur aux ultrasons.

2. Procédé selon la revendication 1, dans lequel la déshydratation est effectuée par pulvérisation, par séchage en tambour ou par lyophilisation.

3. Procédé selon l'une quelconque des revendications 1 - 2, dans lequel avant le traitement d'homogénéisation, le fruit ou le légume est cuit.

4. Procédé selon l'une quelconque des revendications 1 - 4, dans lequel le fruit ou le légume a une teneur en amidon inférieure à 70 % sur la base du fruit ou du légume sec.

5. Procédé selon l'une quelconque des revendications 1 - 5, dans lequel le fruit ou le légume comprend les panais, les navets, les rutabagas, les champignons, les choux fleur, les brocolis, les carottes, les tomates, les pommes ou les mélanges de ceux-ci.

6. Agent épaississant déshydraté particulaire comprenant des légumes et/ou des fruits homogénéisés à haute pression et pouvant être obtenus par un procédé selon les revendications 1 - 5.

7. Agent épaississant particulaire selon la revendication 6, contenant des épaississants additionnels.

8. Procédé d'épaississement d'un produit alimentaire liquide, pouvant être versé, pressé ou prélevé à la cuiller par l'incorporation dans ledit produit alimentaire d'une quantité allant de 0,1 à 30 % en poids d'un agent épaississant particulaire selon la revendication 6 ou 7.

9. Procédé selon la revendication 8, dans lequel l'agent épaississant particulaire est incorporé dans le produit alimentaire dans une quantité comprise entre 1 et 15 % en poids sur la base du produit alimentaire final.
